# EUROPEAN PATENT APPLICATION

(11) **EP 2 242 243 A2**
(43) Date of publication of application: **20.10.2010**
(21) Application number: 10159545.2
(22) Date of filing: 09.04.2010
(51) Int. Cl.: H04M 3/42

(54) **Enhanced system operation by virtualization**

(30) Priority: 16.04.2009 US 212828 P
(71) Applicant: Mitel Networks Corporation, Ottawa, Ontario K2K 2W7 (CA)
(72) Inventor: Fullarton, Sonya, Ottawa Ontario K2B 5P6 (CA); Quan, Tom, Ottawa Ontario K2H 9L7 (CA)
(74) Representative: Pisani, Diana Jean

(57) **Abstract**

A system and method for enhanced operation of internet protocol (IP) telephony is disclosed. The system comprises a call server. The call server includes a shared resources module, a virtual machine environment in communication with the shared resources module the virtual machine having a plurality of virtual machines. A plurality of telecommunication function applications operate on separate instances. Each instance is operable to be connected to a customer through a network connection in communication with at least one of the plurality of virtual machines.

## Description

### BACKGROUND

The advent of internet protocol (IP) telephony has revolutionized the ability of businesses to communicate. A typical IP telephony system includes a telephony server, such as a private branch exchange (PBX) server or IP server. These servers can be relatively expensive. To limit the costs of operating an IP telephony system, the concept of "hosted services" has been developed.

With hosted services, a business can contract to use a call-processing server located off of its premises. The business can purchase or lease IP telephones and other devices. The management of call-processing can be outsourced to a specialized supplier. The specialized staff at a hosted services provider can provide the IP telephony infrastructure, operation, and maintenance services. This enables a business to have modern telecommunications abilities without having to concern itself with the issues of the day to day management and maintenance of an IP telephony system. In addition, the use of hosted services can reduce the costs associated with the evolution and upgrading of the technology.

A hosted services provider can reduce the overall cost of IP telephony systems to customers by enabling multiple businesses or entities to share common IP telephony resources, such as the telephony server.

While the customers are aware of the fact that they are sharing a network with other customers, they still expect to have a large degree of control of the operation of their internal communications systems. For example, a customer may wish to assign the number zero to their attendant, 1111 to the manager, and 4357 (HELP) to their internal IT support line. In more modern systems, customers can expect to be able to have extensive options for the customization of call-processing operations including the special handling of customer calls based on selected criteria.

The amount of customization that a hosted services provider can offer is often dependent on the configuration of the telephony servers. Two businesses that share the same telephony server may be restricted to dividing up the available telephony numbers between them. Thus, only one business can use the number zero for its attendant, or 4357 for a help line, and so forth. In order to maximize the amount of customization that is possible, each business can be assigned to its own telephony server. However, that substantially eliminates many of the cost savings provided by a hosted services provider. Thus, the amount of customization offered by a hosted services provider is often limited by the cost to the customers.

### BRIEF DESCRIPTION OF THE DRAWINGS

Features and advantages of the invention will be apparent from the detailed description which follows, taken in conjunction with the accompanying drawings, which together illustrate, by way of example, features of the invention; and, wherein:

FIG. 1 illustrates an example of a hosted services provider having a plurality of PBX servers;

FIG. 2 illustrates an example of a hosted services provider having a PBX server configured to provide tenanting to multiple customers;

FIG. 3 illustrates an example system for a call server providing multiple separate instances connected through a virtual machine environment to run multiple call-processing instances on a single call server in accordance with an embodiment of the present invention;

FIG. 4 illustrates an example system for a call server providing multiple separate call-processing instances connected to multiple customers through a virtual machine environment on a single call server in accordance with an embodiment of the present invention;

FIG. 5 illustrates an example system for a call server providing multiple separate instances connected through a virtual machine environment to run multiple separate telecommunication functions on a single call server in accordance with an embodiment of the present invention;

FIG. 6 illustrates an example system for a call server providing multiple separate instances connected through a virtual machine environment to run multiple legacy PBX server software systems on a single call server in accordance with an embodiment of the present invention;

FIG. 7 illustrates an example system for a call server providing multiple separate instances connected through a virtual machine environment with external PBX servers and application servers in accordance with an embodiment of the present invention;

FIG. 8 illustrates an example system for a call server providing multiple separate instances connected through a virtual machine environment to run trunking and sharing software and call-processing systems on a single call server in accordance with an embodiment of the present invention; and

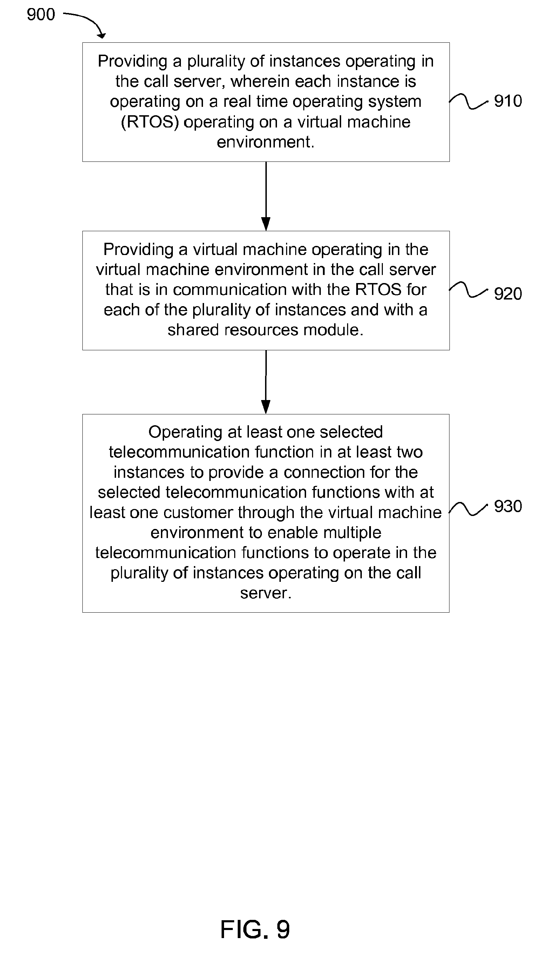

FIG. 9 depicts a flow chart for a method for enhanced operation of internet protocol (IP) telephony on a call server running a real time operating system in accordance with an embodiment of the present invention.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

Furthermore, the described features, structures, or characteristics may be combined in any suitable manner in one or more embodiments. In the following description, numerous specific details are provided, such as examples of software modules, computer architecture, networking, and so forth., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

### DEFINITIONS

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking, the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

### EXAMPLE EMBODIMENTS

An initial overview of technology embodiments is provided below and then technology embodiments are described in further detail later. This initial summary is intended to aid readers in understanding the technology more quickly but is not intended to identify key features or essential features of the technology nor is it intended to limit the scope of the claimed subject matter.

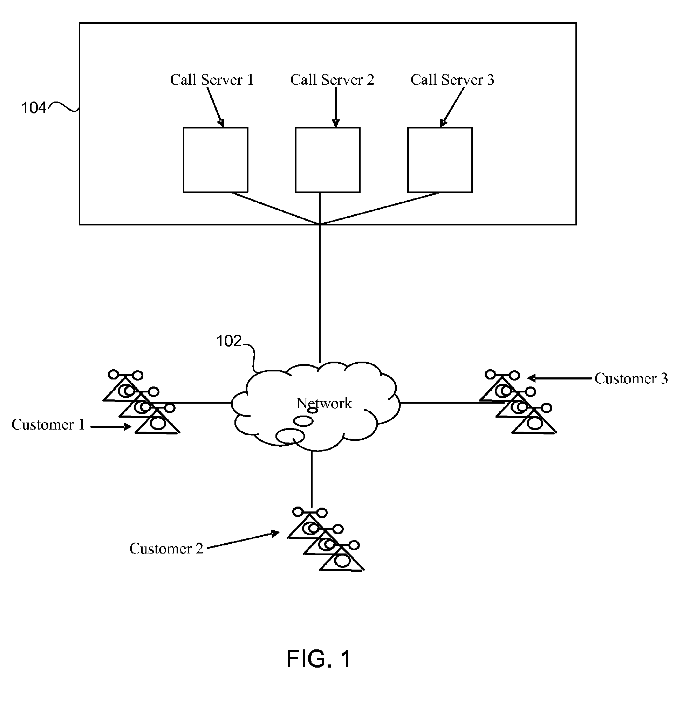

A hosted services provider for IP telephony systems desires to provide each customer with a system that is equivalent in function to a private PBX system. One way in which this can be accomplished is shown in FIG. 1. A plurality of customers, such as customer 1, customer 2, and customer 3, can be connected through a network 102 to a hosted services provider 104. Customer 1, customer 2, and customer 3 can each be provided its own call server by the hosted services provider.

Providing each customer with its own call server is equivalent to the supplier providing an individual PBX server to each customer. This enables the service provider to maximize the flexibility and customization that it is able to provide to each customer. However, the costs of providing each customer and individual server are relatively high and significant resources are wasted. Modern servers have the capacity to allow call-processing services to be supplied to a large number of users. A single call server can provide call-processing services to over one thousand people. In the configuration shown in FIG. 1, much of the capacity will likely sit idle when small businesses or other entities having less than one thousand employees or users are assigned to a single call server.

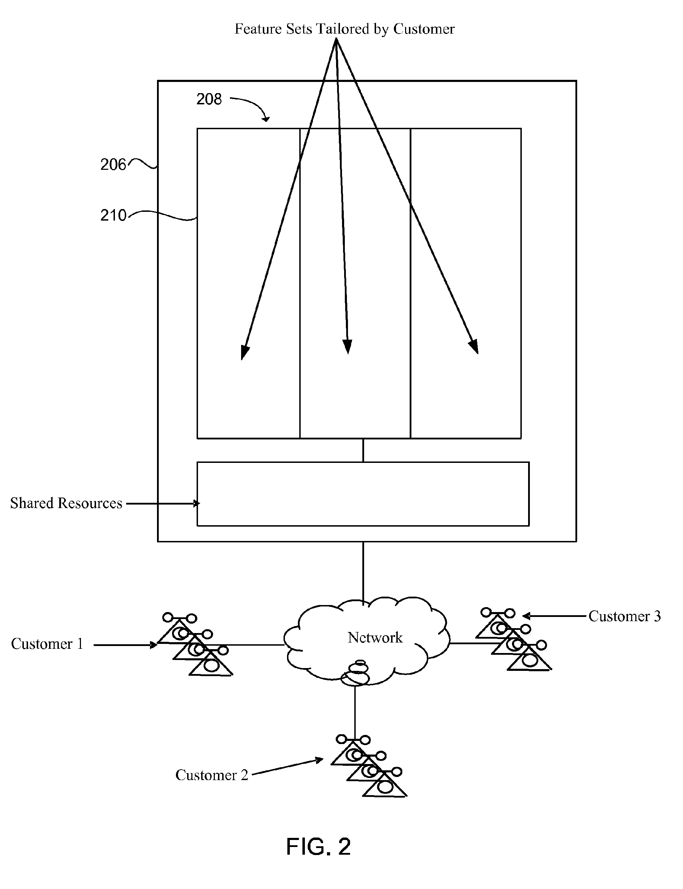

FIG. 2 shows a different configuration in which the cost of the servers and the energy used in maintaining them can be lessened relative to the configuration of FIG. 1. In FIG. 2, the IP telephony for multiple customers is provided by a single call server 206. This can reduce the operational and environmental costs of operating the IP telephony system. In the configuration shown, a call-processing instance 210 is modified to provide a service typically referred to as "tenanting".

To provide tenanting, call-processing and management operations are modified. The multiple feature sets 208 operating on the single call server are modified so that the feature can be used by multiple independent customers, such as independent tenants, companies, or other types of entities. In order to accomplish this, the choices available to the multiple customers are limited and complexity of the software development and maintenance is increased.

For example, the management of numbering plans will not be unitary but will be based on multiple independent plans. Each customer may have a different plan. There is only one call-processing and management instance 210, which operate in awareness of the individual tenant numbering plans. Features such as call originating (dialing, etc.) and routing features are done in awareness of these individual numbering plans. Other call features and their related management services are similarly modified from that of the traditional PBX services. Shared services, such as trunk groups, are typically fairly distributed among the individual feature sets by management services.

Through the use of tenanting, the owners of large office buildings have the opportunity to supply tenants with communication services. This is a possible solution to the issue of hosted services. However, tenanting adds complexity to the call server software, such as the software used to operate a PBX server. Individual software based features offered through tenanting must be assessed based on their effect on tenanting. The appropriate logic is added to the software features to enable the feature to work in a tenanting environment. This adds delay to the evolution of PBX feature releases due to the added burden in development and testing. Cost increases in a PBX system are typical when the system is extended beyond a standard model of a single customer per call-processing load.

The tenanting solution illustrated in FIG. 2 does address the cost concern of the use of multiple physical servers, as shown in FIG. 1. However, the use of tenanting to solve the problem merely moves the cost to the development of call-processing and management software. It also adds delay to the development of new features, which reduces the commercial attractiveness of the hosted solution. One challenge with tenanting is that it violates the basic principle of "separation of concerns." The tenanting concern is crossed intimately with both management and call-processing functions. The tenanting issue has to be continually reconsidered for every modification to the call server software. Each time an upgrade is made, the effects of the upgrade on other tenants are considered.

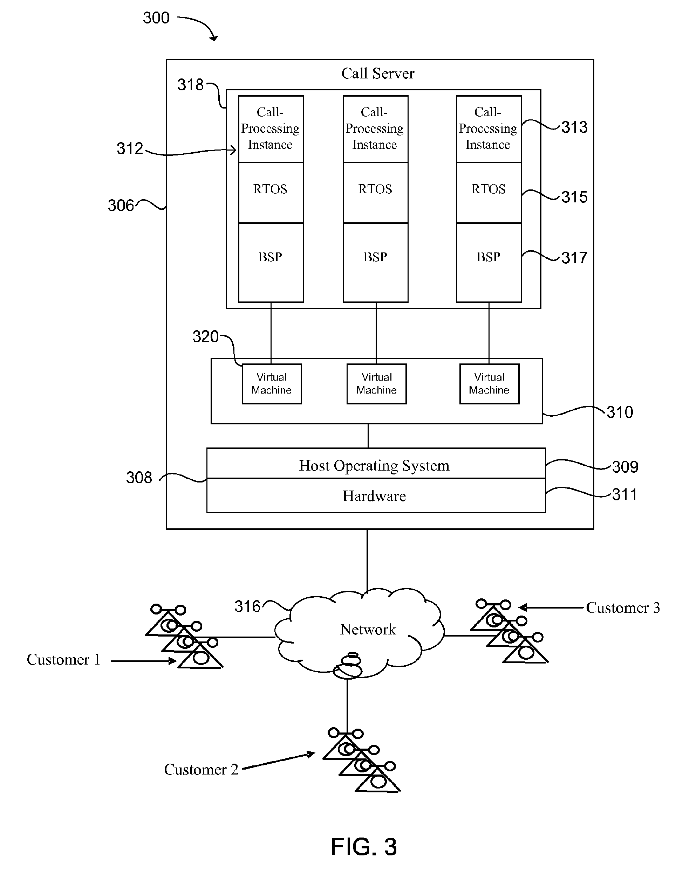

FIG. 3 illustrates one exemplary embodiment of a system in which the "separation of concerns" issue and the cost and inefficiency concerns of the configuration of FIG. 1 are addressed. Instead of having a single unitary call-processing instance that is aware of the multiple customers, each customer is given its own call-processing instance. Each call-processing instance is unitary and functions to the needs of an individual customer. Each of the multiple call-processing instances can effectively act as a separate call server, with each customer being given its own virtual call server.

Thus, the configuration shown in FIG. 3 shares many of the best attributes of the individual servers and tenanting configurations illustrated in FIG. 1 and FIG. 2. The configuration of FIG. 3 can provide hosted call-processing services to multiple customers in a single call server without being limited by the high price and complexity introduced by the configurations shown in FIG. 1 and FIG. 2.

FIG. 3 illustrates one example of a system 300 for enhanced operation of internet protocol (IP) telephony. The system includes a call server 306, such as an IP Telephony Server. The server can operate using a Host Operating System 309 such as Microsoft Windows^{™}, Microsoft DOS^{™}, MAC OS X^{™}, UNIX^{™}, LINUX^{™} and SOLARIS^{™}. In this example embodiment, the HOS is included in a shared resources module 308 with the server's hardware. A virtual machine environment 310 is in communication with the shared resources module. A plurality of unitary call-processing instances 312 operate within the server 306. Each unitary call-processing instance is operable to be connected to a customer through a network connection 316. A separate virtual machine 320 is in communication with each of the plurality of unitary call-processing instances 312 and the shared resources 308.

The capacity of the physical server 306 upon which the separate call-processing instances 312 operate can be shared among multiple customers. For example, the shared resources 308 can include shared variable memory, digital storage, communication ports, and so forth. These resources can be shared between a plurality of separate call-processing instances 312. Each call-processing instance is typically assigned to a single customer.

Sufficient call-processing instances 312 can be added to enable the full capacity of the server 306 to be used. The tenanting issue of added complexity in call-processing is addressed by providing an architecture in which the issue of "separation of concerns" is adequately addressed. No significant modifications are necessary to enable standard single customer call-processing software to operate within an instance. Instead, the virtual machine environment (VME) 310 is supplied.

The VME 310 enables the separate call-processing instances to be evolved individually. This allows each customer's software to be changed and upgraded without the need to analyze the effect of the change on other customers, as occurs in the tenanting configuration shown in FIG. 2. Thus, the example configuration shown in FIG. 3 enables multiple customers to use a single call server 306 while minimizing the "separation of concerns" challenges that affect a tenanting configuration.

In the example embodiment shown in FIG. 3, the separate call-processing instances 312 can be operated on a single server 306 through the use of the virtual machine environment 310 with a separate virtual machine 320 coupled to each call-processing instance 312. To each of the call-processing instances, the virtual machine appears to be a full system with all of the resources needed by the call-processing instance. However, to the virtual machine environment, the instances are using the same shared resources provided by the host operating system 309 and computer hardware 311 in the shared resources module 308. This is accomplished by allocating different resources, such as IP ports and memory to each instance, and managing access to other resources. Interrupts and exceptions from the Host Operating System appear to the Real Time Operating System (RTOS) Environment 318 as if they occurred on hardware that is running the RTOS natively. The RTOS environment invokes Host OS services by means of a proxy.

In the example embodiment illustrated in FIG. 3, the RTOS environment 318 is comprised of a plurality of instances 312. Each instance can operate one or more real time software applications 313. In this example, a call-processing application is running in each instance. The application(s) in each instance can operate separately from other instances running on the server. The application(s) in each instance can operate on a Real Time Operating System 315. Each instance can operate a separate RTOS, such as VX Works^{™}, Windows CE^{™}, Real Time Linux Server^{™}, or another type of embedded RTOS.

The RTOS 315 manages the hardware and software resources of the server 306 by interfacing with computer hardware 311 via a board support package (BSP) 317. The BSP is configured to communicate with the software interface of the virtual machine 320 in the VME 310. The various commands, interrupts and data are sent and received from memory and/or programmatically while the RTOS 315 is running under the HOS 309. This memory is shared with other threads running under the HOS, which in turn interact with the HOS 309 to gain functional access to the hardware 311. U.S Patent Application No. 11/775,569 filed on July 10, 2007, which is hereby incorporated by reference, provides additional examples regarding the VME 310.

With an explanation of the virtual machine technique, an embodiment for communicating with each instance 312 through the virtual machine environment 310 is now described.

Each call-processing instance 312 will operate until the host operating system 309 enables another process to run. Each virtual machine 320 is treated as a separate process by the host operating system. With this technique, the virtual machine environment 310 can schedule and run as many call-processing instances 312 as needed. The amount of processor time given to each instance may be set by policies in the virtual machine environment. The amount of processor time given to each instance is typically substantially the same.

The virtual machine environment 310 can handle shared functions such as the reception and transmission of messages from the network 316. Each call-processing instance will not be aware of this process and will function as if it is dealing with the computer hardware 311 directly. No changes are typically required to the real time operating system application 313 operating in the instance relative to RTOS application designed to run alone on a call server. In this fashion, multiple call-processing instances 312 can operate independently in a single call server 306.

A hosted services provider may use multiple servers, with each server each having multiple call-processing instances. Thus, the number of call-processing instances on a single server can be selected based on the abilities of the server and the needs of the customers associated with the call-processing instances on the server. In the examples shown in FIGs. 3-8, three instances are provided for illustration. However, this is not intended to be limiting. Depending on the hardware and software features of the call server 306, dozens, even hundreds of different instances can operate separately on the call server as it runs the real time operating system.

The foregoing description has taught how a number of separate call-processing instances may be created through the use of a virtual machine environment operating in a call server. The ability to operate multiple separate call-processing instances on a single server is useful for the provision of hosted services.

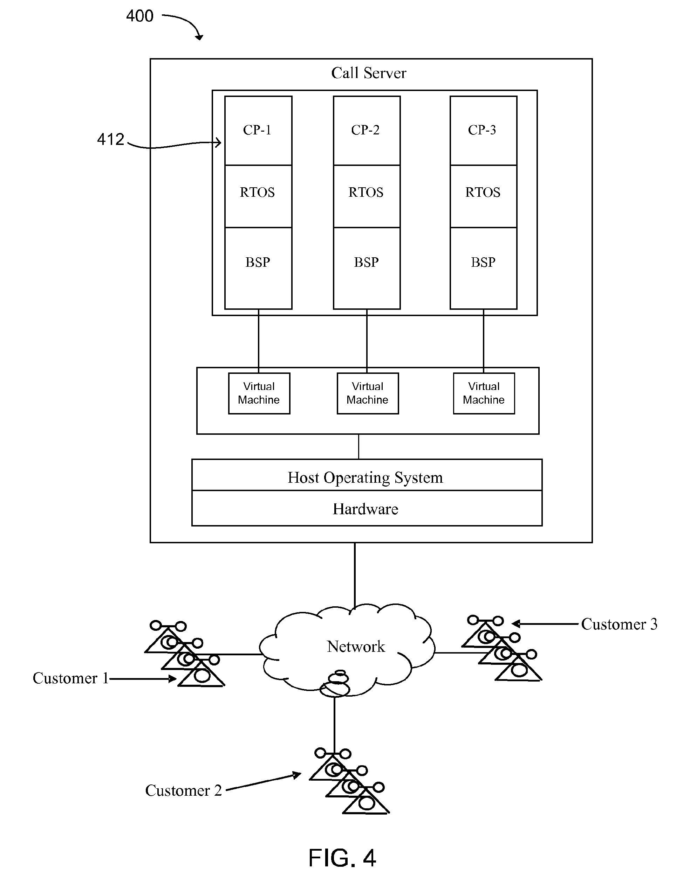

As illustrated in FIG. 4, an example system 400 is illustrated in which a number of separate and independent customers may be served through the use of a system for enhanced operation of IP telephony. For example, customers 1, 2 and 3 can each have their own call-processing instance 412, thereby effectively enabling each customer to have independent use of a call server, such as a PBX or IP call server. Each of the customers can have their own preferences established in their instance(s) without reference to other customers. So, for example, each customer can have their own numbering plan, thereby enabling the attendant for each customer to be given the directory number of "0".

The example embodiment illustrated in FIG. 4 shows that customers for hosted systems can be supplied with their own effective PBX as an isolated function. In addition to providing voice communication capabilities, in the telecommunication market there are a number of independent product categories that are not necessarily bundled together into the same locale of software.

For example, there are separate telecommunication functions such as a PBX server configured to provide voice communications and an automatic call distribution (ACD) system configured to route incoming calls to selected terminals. These telecommunication functions are commonly sold as separate but cooperating products for use within a telecommunications system. Protocols exist so that these functions can operate together. However, they are typically separate instances of software that communicate by networking. These separate functions are each supplied with their own hardware server. Interconnecting network elements enable the cooperation of the separate functions located on the separate servers. Such separate equipment is costly to purchase and maintain. For small entities, the cost of operating multiple servers can be prohibitive.

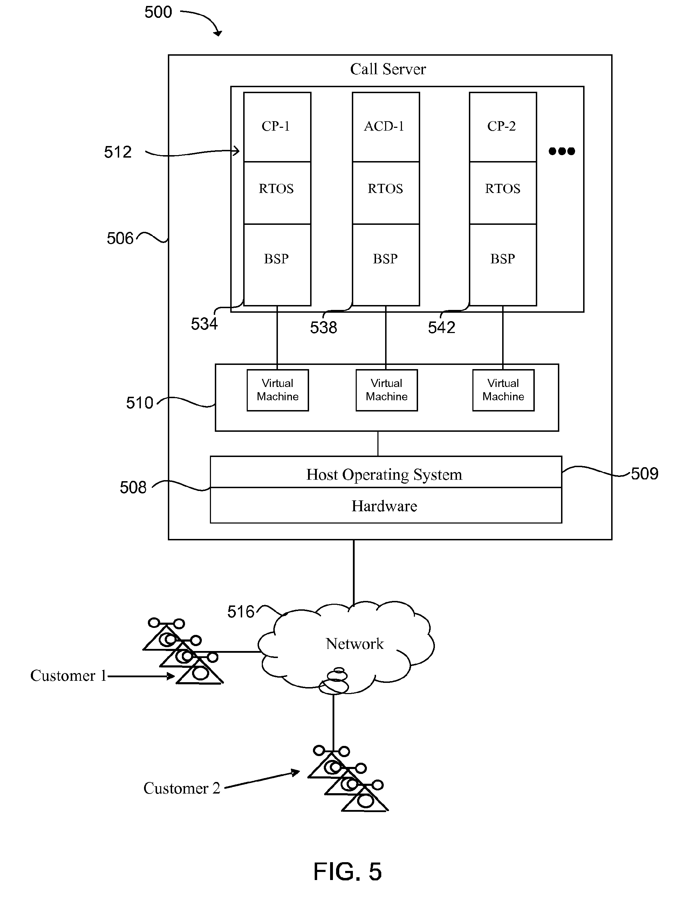

In the example embodiment system 500 illustrated in FIG. 5, separate telecommunication functions can each be assigned to their own instance 512 within the call server 506. Rather than communicating via the interconnecting network elements, as separate servers do, the telecommunication functions operating in the separate instances can communicate through the shared resources 508. The telecommunication functions operating in their own instance 512 can each have access to the shared resources 508 through the virtual machine environment 510. Using the shared resources, it appears to each telecommunication function that it is operating on a separate server. The use of the virtual machine environment removes the requirement for operating multiple servers and using external networking equipment to interconnect the separate telecommunications functions, thereby eliminating the additional cost for such equipment and enabling the operation of multiple telecommunication functions to be affordable to small entities.

In the example embodiment system 500 of FIG. 5, a call-processing instance 534 is connected to customer 1 through the network 516. A separate telecommunications function, an automatic call distribution function, is operating in a separate instance 538 operating within the call server 506. The automatic call distribution function is also connected to customer 1 through the network. The separate functions of call-processing and the ACD operate as if they were run on separate servers for customer 1. An additional instance is shown with a call-processing instance 542 connected to customer 2 through the network 516. While three instances 512 are shown in the figures, this is not intended to be limiting. Depending on the hardware and software features of the server, dozens, even hundreds of different instances running real time software can operate separately on the call server 506. The separate telecommunications functions can communicate between the instances via internal messaging within the server. This can enable potentially dozens of different customers to each operate multiple telecommunications functions within a single sever.

The ability to operate multiple separate telecommunication functions in separate instances 512 operating a real time operating system on a call server 506 significantly reduces the need to operate multiple servers connected through networking equipment. Multiple isolated functions can be combined as instances 512 operating within the same server. Other examples of functions that typically operate on separate servers include Interactive Voice Response (IVR), voicemail, presence and availability servers, and so forth. Each of these functions can operate within an instance 512 of the call server 506.

In one embodiment, the use of separate instances 512 operating on a call server 506, as discussed above, does not require any changes in the software code for any of the isolated telecommunication functions. It is well known that it is difficult and costly to merge separate pieces of software whose designs were created separately. Those most familiar with the code for legacy systems are often retired, have changed employment, or are otherwise unavailable. However, the ability to operate multiple separate telecommunication functions in isolated instances, as discussed above, allows legacy software to be used without modification by taking the integration function outside of the legacy code.

Moreover, setting up an additional instance is relatively quick and simple relative to setting up and provisioning a new server. The use of a call server capable of operating multiple separate instances 512 through a virtual machine environment 510 enables a new customer to be quickly and simply added compared to the process of provisioning a new server. This minimizes the startup costs of adding new customers, thereby enabling a business to more efficiently add new customers at a reduced cost.

The use of a call server capable of operating multiple separate instances 512 through a virtual machine environment 510 also enables a more efficient use of modern computer processors. Computer processing units are typically configured to operate multiple threads in parallel and even operate one or more programs on multiple processing cores at one time. However, many software programs are not configured to take advantage of the multithreading and the use of multiple cores in a processor. The host operating system 509 can be configured to enable the plurality of instances 512 to take advantage of multithreading and/or the use of multiple cores on a processor. This enables the efficiency of the computer processing Unit(s) in the call server to be maximized.

The capacity to operate separate telecommunication functions in isolated instances also enables separate functions to be more customized than would typically be affordable if each separate function had to operate on a separate server. For example, a call-processing function can be configured to specifically support ACD agents. The call-processing function can have specific policies, call reporting options, and so forth. Additional instances can be created to support different roles or departments operating within an organization. Thus, the ability to operate multiple separate telecommunication functions in isolated instances on a single server can enable customers, both large and small, to achieve more customized and specific telecommunications capabilities, thereby providing better service to their own clients and employees.

The use of multiple isolated instances on a single call server can offer advantages in the effective management for reliability and evolution of telecommunications functions. When each separate telecommunication function is operated on a separate server then switching to a new software load can require an all or nothing decision. Either the customer upgrades one or more of their telecommunications servers, or determines the potential risk is not worth an upgrade.

In one example, a vendor can offer a revised release of software with some features that a customer may find attractive. The attractiveness of the new or enhanced features can be balanced against the fact that they are provided by a new software load that has little or no field experience. The lack of field experience can result in bugs and glitches in the new software that can reduce the efficiency of the customer and may even affect the satisfaction of the customer's clients. Thus, many customers are wary of upgrading telecommunications software. As a result, these customers have difficulty in taking advantage of new functionality as it develops. The larger a customer, or the more critical the communications package, the longer the customer may wait to upgrade. This can reduce the efficiency of the customer's business.

The difficulty of upgrading important and critical telecommunication infrastructure can be addressed by using multiple isolated instances operating on a single call server. Since it can be relatively inexpensive to create an additional instance on the call server, call-processing functions or other telecommunication functions such as ACD can be upgraded without the need for the customer to make an all or nothing type decision.

For example, a new version of software for a selected telecommunication function can operate in a separate instance on the call server. The upgraded function can first be used by users within the customer's business who are not involved in critical operations. Users involved in critical operations may be serviced by another instance of the selected telecommunication function which is running a well proven software load. After a period of evaluation, a decision can be taken as to which version of software to use. If the evaluation is successful, critical users may be moved onto the new load. If the software proves to be non satisfactory, then the non-critical users can be moved back to the proven load. This enables customers to evaluate new capabilities and enhancements prior to fully adopting an upgrade, thereby enhancing both the reliability and evolvability of their telecommunications systems through the use of operating multiple isolated instances on a single call server.

In another embodiment, a customer may maintain certain users or classes of users on different software versions. For example, critical users may be maintained on a software load that has had long field experience and is deemed to be substantially reliable. Different classes of users may be given service by software loads whose reliability and functionality are balanced to the criticality and functionality needs of their duties. Thus, the customer is provided with the ability to have different evolutionary paths with different schedules and criteria for differing groups. All of these software loads can operate in isolated instances running on the same call server or separate call servers, as desired.

The ability to run multiple telecommunication functions in isolated instances on a single call server also provides improvements in the security of the management system. With the ability to provide differing classes of users with their own software loads, the management of these systems can be partitioned among different personnel. For example, management of instances serving critical users can be restricted to only certain trusted personnel. Other personnel may not be given accounts on such instances, thereby preventing them from interfering with the operation of critical business applications through inadvertence or malice. The ability to operate multiple instances provides a more fine-grained approach to security of a customer's telecommunication system.

In addition, the ability to partition selected functions or personnel allows a customer to use less well trained personnel to maintain the telecommunication system. The personnel designated to maintain less critical instances may not be given access to critical instances. For example, a departmental secretary can be trained to the level necessary to make routine changes without the worry about interference with critical business services should a mistake be made.

There are often inherent limitations in legacy software that can be addressed by a call server configured to run multiple telecommunication functions in isolated instances. Often, legacy software systems were designed to function within an assumed hardware configuration. Among the assumptions that a legacy system may inherit from the assumed hardware configuration were assumptions of the size of the telecommunication systems and the number of devices served. For example, PBX system legacy code often has hardcoded assumptions on the numbers of telephones that may be served or the number of peripheral equipment shelves (e.g. line and trunk shelves) that may be attached. These assumptions will often be pervasive throughout the code and changing the code to remove the limitations is often more difficult than starting over with new code.

One solution to accommodate the legacy code that has previously been used has been termed "clustering". Instead of modifying the legacy call-processing software to remove system size limitations, only an isolated portion of the system is modified so that larger systems may be created out of a number of cooperating PBX servers. The internal numbering system is modified so that the PBX server then hosts a directory number that may be identified by other PBX servers in the cluster. With this system, a company may have a single numbering plan across a number of clustered PBX servers, thus allowing the creation of PBX servers of arbitrary size. Calls between the clustered PBX servers are created using well known trunking protocols, such as DPNSS, that allow for transparency.

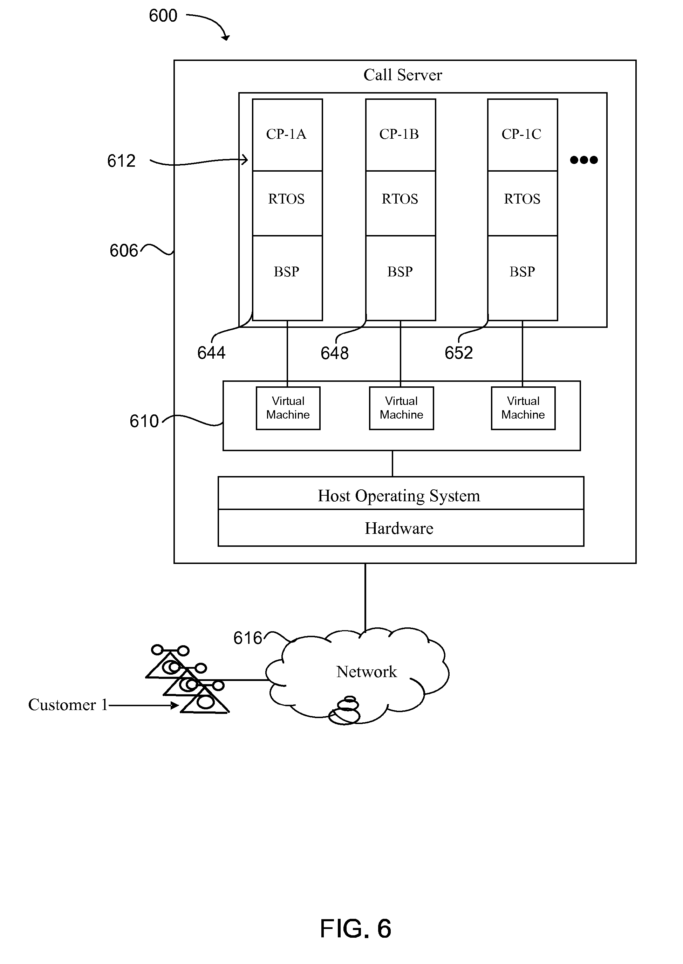

However, each of the PBXs used in the clustering solution discussed above typically require their own server to operate, thereby creating additional hardware costs. Rather than using separate servers, a system 600 can be configured to enable a number of cooperating PBX servers 644, 648, 652 to operate as separate instances 612 on a single call server 606 to form a cluster, as shown in the example embodiment illustrated in FIG. 6. A single customer can be supplied with multiple instances of clustered PBX call-processing on the same server 606. The cooperating call-processing instances CP-1A through CP-1C operating on the separate instances 612 can communicate through the virtual machine environment 610. This enables the use of legacy systems to be continued, thereby eliminating the need to re-write legacy software and reducing computing costs by optimizing the loads on modern call servers.

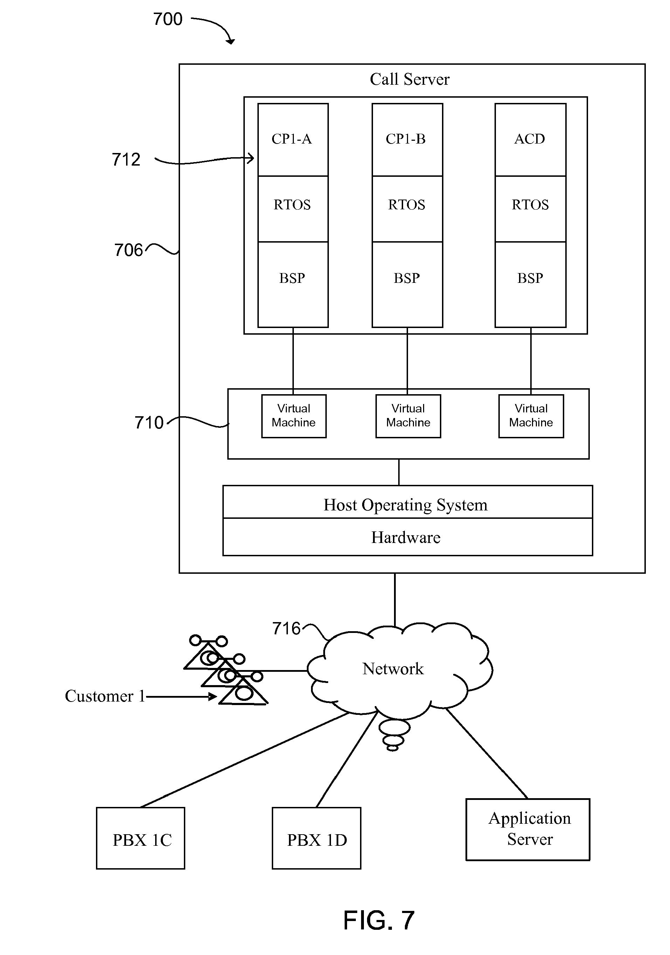

Legacy systems operating on separate instances 612 of a call server 606 are capable of interoperating in a solution with traditional and legacy systems using common interfaces. For example, FIG. 7 shows two call-processing instances CP1-A and CP1-B operating in separate instances 712 on the call server 706. These call-processing instances can inter-operate with traditional PBX systems PBX 1C and PBX 1D, and other telecommunication functions such as an application server using common interfaces as shown in FIG 7.

This enables a customer with an existing cluster of PBX servers to expand their system by adding call-processing instances operating on different instances on a call server 706 to enable additional users to be hosted, thereby creating a hybrid system that includes both the call server 706 running multiple instances 712 through the virtual machine environment 710, as well as the traditional PBX servers and application servers operating in a networked environment.

The call-processing instances on the call server 706 and the PBX servers can interact through the network 716 and virtual machine environment 710 to behave as a solution in the same way that a solution containing only PBX's or only Call-processing instances would interact. The customer can use the additional Call-processing instances to provide capabilities not available on the legacy PBX's, or to simply expand the solution. Additional telecommunication functions, such as an ACD, can also be added to separate instances of the call server 706. The additional telecommunication functions can interface with the call-processing instances and the separate PBX servers as needed.

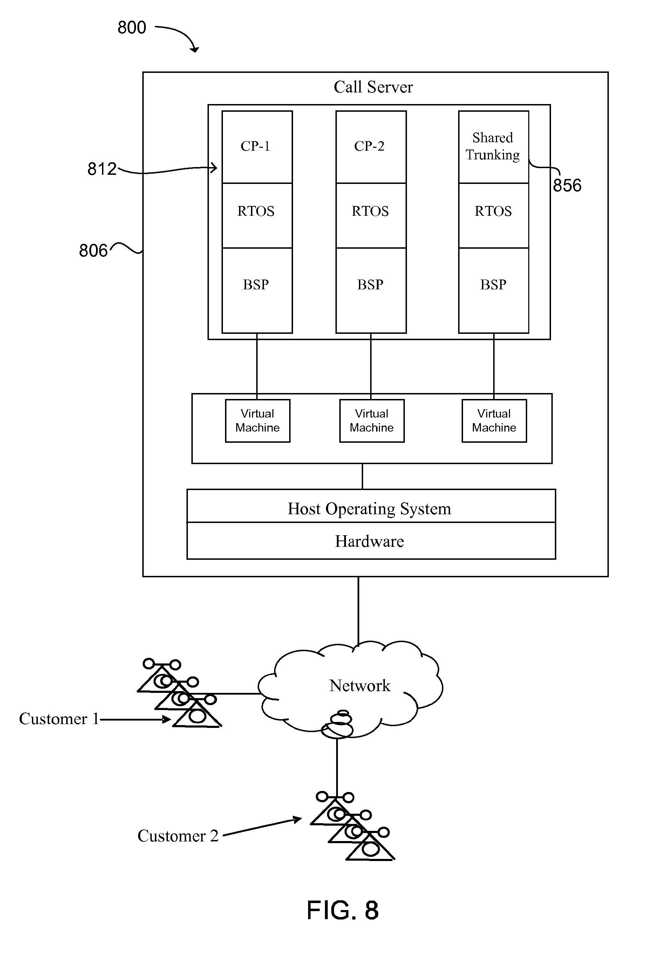

A hosted services provider typically shares resources across a number of customers. The provider can purchase a number of Direct Inward Dial (DID), Session Initiation Protocol (SIP), or other types of trunks and share these dynamically as needed across multiple customers. The provider can achieve an economy of scale by purchasing these trunks from a carrier and reselling access to them to its own customers, either statistically or dynamically. One example embodiment of a system 800 to operate shared trunking software 856 running in one instance 812 is shown in FIG. 8. An outgoing call from customer 1 or customer 2 can be sent through the shared trunking instance 856 which will insert the proper caller ID information and route the call to a carrier. Incoming calls can be handled in a similar way with an end point being detected from DID or SIP header information and the call routed to the proper instance based on which customer the call is from.

As with the other example embodiments shown, additional instances can be used to operate call-processing or separate telecommunications functions within the call server 806. For example, the trunking capability operating in one or more separate instances 812 on the call server can be extended so that the hosted services provider can supply shared ACD, IVR, presence, and other systems as combined or separate instances, and offer these as services to its customers. The ability to offer these services as separate instances on a single call server can significantly reduce the cost of hardware and maintenance issues, thereby providing telecommunication services to customers at a reduced rate.

In another embodiment, a method 900 for enhanced operation of internet protocol (IP) telephony on a call server running a real time operating system is disclosed. The method includes the operation of providing 910 a plurality of instances operating in the call server, wherein each instance is operating on a real time operating system (RTOS) operating on a virtual machine environment. A virtual machine operating in the virtual machine environment in the call server is provided 920 that is in communication with the RTOS for each of the plurality of call-processing instances. The virtual machine environment is also in communication with a shared resources module. At least one selected telecommunication function is operated 930 in at least two instances to provide a connection for the selected telecommunication function with at least one customer through the virtual machine environment. This enables multiple telecommunication functions to operate in the plurality of instances operating on the call server.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A system for enhanced operation of internet protocol (IP) telephony, comprising:
a call server comprising:
a shared resources module;
a virtual machine environment in communication with the shared resources module, the virtual machine environment having a plurality of virtual machines; and
a plurality of telecommunication function applications operating on separate instances, wherein each telecommunication function application instance is operable to be connected to a customer through at least one of the plurality of virtual machines that is in communication with the customer through a network connection.

2. The system of claim 1, wherein the call server operates on a host operating system.

3. The system of claim 2, wherein the host operating system is configured to enable the plurality of telecommunication function application instances to use at least one of multithreading and multiple processor cores of at least one central processing unit operating in the call server.

4. The system of claim 1, wherein each telecommunication function application runs on a real time operating system operating in an instance in communication with at least one of the plurality of virtual machines.

5. The system of claim 4, wherein the real time operating system communicates with the virtual machine via a board support package.

6. The system of claim 1, wherein the plurality of telecommunication function applications are selected from the group consisting of a private branch exchange (PBX) function, an automatic call distribution (ACD) function, an interactive voice response (IVR) function, a voicemail function, and a presence and availability function.

7. The system of claim 1, further comprising at least one external server configured to operate a telecommunication function that is in communication with at least one telecommunication function application instance operating on the call server.

8. A method for enhanced operation of internet protocol (IP) telephony on a call server, comprising:
providing a plurality of instances operating in the call server, wherein each instance is operating on a real time operating system (RTOS) operating in a virtual machine environment;
providing a virtual machine operating in the virtual machine environment in the call server that is in communication with the RTOS for each of the plurality of instances and with a shared resources module; and
operating at least one selected telecommunication function in at least two instances to provide a connection for the selected telecommunication functions with at least one customer through the virtual machine environment to enable multiple telecommunication functions to operate in the plurality of instances operating on the call server.

9. The method of claim 8, wherein operating at least one selected telecommunication function further comprising operating a trunking software function operating in at least one of the plurality of instances to enable call-processing instances operating in additional instances to share trunking provided by the trunking software function.

10. A method for enhanced operation of internet protocol (IP) telephony, comprising:
providing a real time operating system (RTOS) environment operating on a call server, the RTOS environment including a plurality of separate instances, wherein each instance comprises:
a real time operating system;
a telecommunication function operating on the real time operating system;
a board support package configured to communicate with a software interface of a virtual machine operating in a virtual machine environment; and
operating at least one selected telecommunication function in at least two instances to provide a connection for the selected telecommunication functions with at least one customer through the virtual machine environment to enable multiple telecommunication functions to operate in the plurality of separate instances operating on the call server.

11. The method of claim 8 or 10, further comprising operating a new version of software for the at least one selected telecommunication function in a separate instance on the call server relative to an instance of a previous version of the software operating on the call server to enable the new version to operate while the previous version is still operating on the call server.

12. The method of claim 8 or 10, further comprising assigning selected classes of users to selected software loads for the at least one selected telecommunication function, wherein each of the selected software loads is operating in one of the plurality of separate instances and wherein the assignment of the selected classes of users to the selected software loads is determined based on a reliability and functionality of the software loads relative to the selected class's criticality to the at least one customer.

13. The method of claim 12, further comprising assigning management of the selected telecommunication function for the selected classes to a management team restricted to personnel selected to be trustworthy to provide security to the selected telecommunication function.

14. The method of claim 12, further comprising assigning management of the selected telecommunication function for the selected classes to a management team comprised of at least one employee that is not substantially trained in operating the selected telecommunication function to provide inexpensive labor for managing the selected telecommunication function.

15. The method of claim 8 or 10, further comprising operating a selected number of cooperating PBX call-processing instances as separate instances on the call server to form a legacy PBX call-processing cluster operating on a single call server.
